# EUROPÄISCHE PATENTANMELDUNG

(11) **EP 1 048 502 A2**
(43) Veröffentlichungstag der Anmeldung: **02.11.2000**
(21) Anmeldenummer: 00890118.3
(22) Anmeldetag: 12.04.2000
(51) Int. Cl.: B60J 5/04

(54) **Plattenförmiger Sicherheitsbauteil**

(30) Priorität: 21.04.1999 AT 70499
(71) Anmelder: Hexcel Composites GmbH., 4061 Pasching (AT)
(72) Erfinder: Evers, Heinz, 4611 Buchkirchen (AT)
(74) Vertreter: Hübscher, Helmut, Dipl.-Ing.

(57) **Zusammenfassung**

Ein plattenförmiger Sicherheitsbauteil (1) aus Verbundwerkstoff ist in einander gegenüberliegenden Bauteilrandbereichen (4) mit Widerlagern (5) zur Anbindung an eine Tragkonstruktion ausgestattet. Um eine unter Krafteinwirkung eine Längenänderung ermöglichende Anbindung zu erreichen, weisen die Widerlager (5) zumindest eines Randbereiches (4) über die Anbindekräfte (K) druckbelastbare Lagerkörper (6) aus Honeycomb-Material auf, die mit ihrer Wabenachsrichtung (T) auf die jeweilige Anbindekraftrichtung (R) ausgerichtet sind.

## Beschreibung

Die Erfindung bezieht sich auf einen plattenförmigen Sicherheitsbauteil aus Verbundwerkstoff mit Widerlagern in einander gegenüberliegenden Bauteilrandbereichen zur Anbindung an eine Tragkonstruktion.

Diese passiven Sicherheitsbauteile werden vor allem im Fahrzeugbau als Aufprallschutz eingesetzt und sollen zur erforderlichen Arbeitsaufnahme bei einer auf sie einwirkenden Kraft auch einer bestimmten Längenänderung unterworfen sein, über welche Kraft-Weg-Zusammenhänge es im Fahrzeugbau entsprechende Normen gibt. Sicherheitsbauteile aus Verbundwerkstoffen, die in der Regel aus einem Kernmaterial, vorzugsweise Polyurethan-Hartschaum, und aus einer Faser-Harz-Matrix als Mantelschicht, vorzugsweise Epoxid- oder PUR-Harze in Verbindung mit Carbon-, Glas- oder Aramidfasern, bestehen, sind hinsichtlich ihrer auf das Gewicht bezogenen Steifigkeit einem vergleichbaren Bauteil aus metallischen Werkstoffen meist deutlich überlegen, doch kommt es bisher zu Schwierigkeiten wegen der unzureichenden Dehnbarkeit der verwendeten Materialien. Unter der Voraussetzung einer geeigneten Konstruktion des Verbundbauteiles kann dieser üblicherweise die für die Einhaltung der entsprechenden Sicherheitsnormen geforderte Kraft zerstörungsfrei aufnehmen und die erforder- liche Durchbiegung erreichen, doch bleibt die nötige Längenänderung unter Krafteinwirkung ungenügend, so daß es auch wegen dieser Materialeigenschaften der Verbundbauteile nicht zur gewünschten Kompatibilität mit den im Fahrzeugbau überwiegenden metallischen Werkstoffen, wie Stahl oder Aluminium, kommt.

Wie Versuche gezeigt haben, ist die Anbindung der Sicherheitsbauteile an die Fahrzeugkarosserie bzw. an eine andere Tragkonstruktion und damit die eigentliche Krafteinleitung die Schwachstelle der Gesamtkonstruktion, wobei die bekannten Widerlager zur Anbindung, die sogenannten Inserts aus faserverstärktem Kunststoff oder Aluminium, eine hochfeste Verbindung mit der Tragkonstruktion ergeben sollen und von dieser hochfesten Anbindung auch das Versagen des Gesamtbauteiles ausgelöst wird. Die an sich naheliegende Maßnahme einer Verstärkung der Karosserieanbindung ist allerdings nicht sinnvoll, da diese Verstärkung zu einer Verstärkung der Fahrzeugkonstruktion und damit zu einer entsprechenden Gewichtserhöhung und zu einer Versteifung des Fahrzeuges führen müßte.

Der Erfindung liegt daher die Aufgabe zugrunde, einen plattenförmigen Sicherheitsbauteil der eingangs geschilderten Art zu schaffen, der sich durch sein besonderes Anbindungskonzept auszeichnet und die unter Krafteinwirkung erforderliche Längenänderung ermöglicht.

Die Erfindung löst diese Aufgabe dadurch, daß die Widerlager zumindest eines Randbereiches über die Anbindekräfte druckbelastbare Lagerkörper aus Honeycomb-Material aufweisen, die mit ihrer Wabenachsrichtung auf die jeweilige Anbindekraftrichtung ausgerichtet sind. Durch die Anbindung mittels Lagerkörper aus Wabenmaterial und die Ausrichtung dieses Wabenmaterials auf die Anbindekraftrichtung bringt ein Zusammendrücken des Wabenmaterials unter einer entsprechenden Belastung eine Längenänderung ohne Versagen der Anbindung zwischen Sicherheitsbauteil und Tragkonstruktion mit sich, so daß sich durch den Crush der Lagerkörper die für das erforder- liche Kraft-Weg-Verhältnis des Sicherheitsbauteils notwendige Längenänderung erreichen läßt. Durch verschiedene Parameteränderungen bei der Lagerkörperherstellung, wie die Höhe des Wabenmaterials, die Dichte der Waben, der Folienwerkstoff des Wabenmaterials u. dgl., lassen sich die auslösende Kraft für das Zusammendrücken der Lagerkörper und auch die damit zusammenhängende Längenänderung beeinflussen, um beispielsweise bestimmte Designvorgaben umsetzen zu können. Honeycombs sind hervorragend geeignet, Energie in kontrollierter und gleichmäßiger Art und Weise aufzunehmen und weisen keinerlei rückfedernde Eigenschaften auf, so daß mit ihnen die gewünschte Anbindung eines Sicherheitsbauteiles an eine Tragkonstruktion gewährleistet ist und darüber hinaus diese Anbindung auch an unterschiedliche Bedingungen angepaßt werden kann.

Eine weitere Möglichkeit zur umfassenden Beeinflussung der Anbindungsverhältnisse ergibt sich, wenn die Lagerkörper aus wenigstens zwei durch eine Zwischenschicht voneinander getrennten und zwischen zwei stirnseitigen Deckschichten eingesetzten Lagen des Honeycomb-Materials bestehen, wodurch es zu einer von der Anbindekraft abhängigen schrittweisen Längenänderung entsprechend den eingesetzten Honeycomb-Lagen kommt. Wichtig ist dabei, daß die Kraft flächig auf die Lagerkörper einwirken kann, um den optimalen Wirkungsgrad zu erreichen und das ordnungsgemäße Zusammendrücken der einzelnen Lagen sicherzustellen.

Nicht jeder Sicherheitsbauteil muß für sich an einer festen Tragkonstruktion, wie der Fahrzeugkarosserie, angebunden sein, es ist durchaus auch möglich, zwei oder mehrere Sicherheitsbauteile aneinander anzubinden, um einen Rundumschutz für Fahrzeuge od. dgl. zu erreichen. Dabei sind die einzelnen Sicherheitsbauteile kettenförmig miteinander verbunden und lassen sich auch über Front- und Seitenbereiche des Fahrzeuges herumziehen, so daß sich speziell für einen versetzten Frontalaufprall ein guter Schutz ergibt.

In der Zeichnung ist der Erfindungsgegenstand rein schematisch veranschaulicht, und zwar zeigen
- Fig. 1: einen in eine Fahrzeugtürkonstruktion eingebundenen erfindungsgemäßen Sicherheitsbauteil in Draufsicht und die
- Fig. 2, 3 und 4: ein Widerlager dieses Bauteiles unter drei verschiedenen Bela stungsverhältnissen jeweils in Seitensicht.

Ein plattenförmiges Sicherheitsbauteil 1 aus Verbundwerkstoff mit einem Polyurethanhartschaumkern 2 und einer faserverstärkten Epoxid-Harz-Mantelschicht 3 ist als passiver Schutz in eine Fahrzeugtür F mit einem Metallrahmen M, einer Außenverkleidung A und einer Innenverkleidung I eingebaut, wobei zur Anbindung des Sicherheitsbauteiles 1 an den Metallrahmen M als Tragkonstruktion in den einander gegenüberliegenden seitlichen Bauteilrandbereichen 4 Widerlager 5 vorgesehen sind. Diese Widerlager umfassen Lagerkörper 6 aus jeweils drei Lagen eines Honeycomb-Materials 61, 62, 63, die durch Zwischenschichten 7 voneinander getrennt und zwischen zwei stirnseitigen Deckschichten 8, 9 eingesetzt sind. Durch die Lagerkörper 6 ragt eine im Rahmen M verankerte Schraubenspindel 10, die sich über eine Endverschraubung 11 und eine Druckplatte 12 zur gleichmäßigen und vollflächigen Belastung der Lagerkörperstirnflächen innenseitig am Widerlager 5 abstützt. Die Wabenachsrichtung T der Lagen 61, 62, 63 der Lagerkörper 6 ist auf die durch die Schraubenspindel 10 bestimmte Anbindekraftrichtung R ausgerichtet, so daß die Anbindekraft K das Wabenmaterial der Lagerkörper 6 in Wabenachsrichtung als Druckkraft belastet.

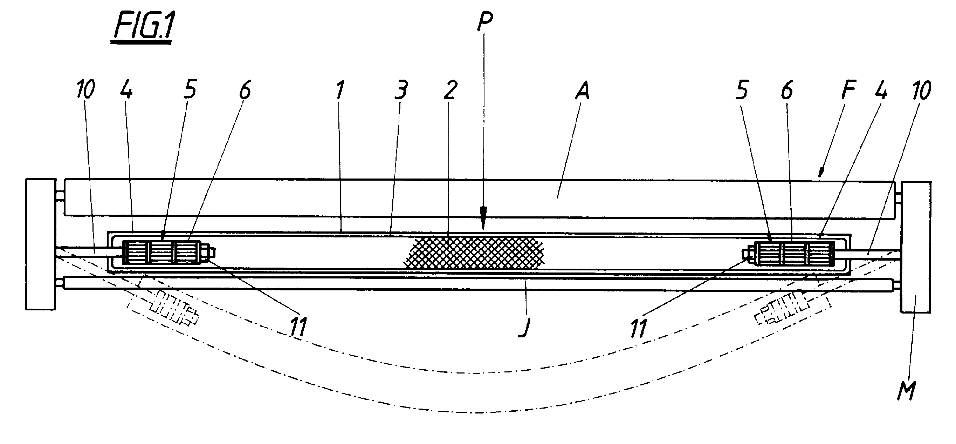

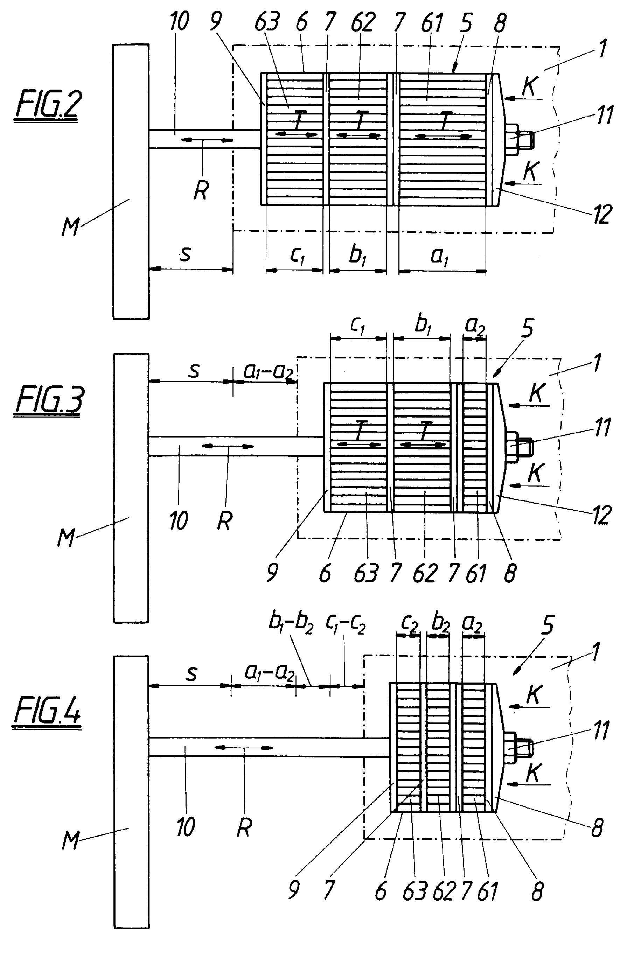

Muß der Sicherheitsbauteil 1 beispielsweise bei einem Seitenaufprall auf die Fahrzeugtür F eine Belastung durch eine quergerichtete Kraft P aufnehmen, wirken die Anbindekräfte K bei der Kraftübertragung an den Rahmen M auf die Widerlager 5 ein (Fig. 1 und 2). Übersteigen diese Anbindekräfte K einen für die Lagerkörper 6 kritischen Wert, werden die jeweils ersten Lagen 61 mit der Höhe a1 aus Honeycomb-Material der Lagerkörper 6 zusammengedrückt und der Crush dieser Honeycomb-Lagen 61 auf die Höhe a2 führt zu einer Längenänderung (a1 - a2) des sich durchbiegenden Sicherheitsbauteiles 1 (Fig. 3). Übersteigt die Anbindekraft einen weiteren kritischen Wert, werden die zweiten Lagen 62 mit der Höhe b1 des Honeycomb-Materials zusammengedrückt und auch dieser Crush auf die Höhe b2 führt zu einer Längenänderung (b1 - b2) des Sicherheitsbauteiles 1, und erreicht schließlich die Anbindekraft einen dritten kritischen Wert, werden auch die dritten Lagen 63 mit der Höhe c1 des Honeycomb-Materials auf die Höhe c2 zusammengedrückt und der Sicherheitsbauteil 1 erfährt neuerlich eine Längenänderung (c2 - c1), so daß sich unter der Belastung der Kraft P bei gleichzeitiger Durchbiegung insgesamt eine Längenänderung von (a1 - a2) + (b1 - b2) + (c1 - c2) ergibt (Fig. 1 und 4). Damit kann nun der Sicherheitsbauteil 1 die für die Schutzwirkung erforderliche Arbeit aus Kraf P und Längenänderung aufnehmen und seine Sicherheitsfunktion erfüllen.

Zur Beeinflussung des Kraft-Weg-Verhältnisses können die Lagerkörper aus unterschiedlichen Honeycomb-Materialien hergestellt sein, lassen sich die Lagerkörper aus verschieden hohen Lagen des Honeycomb-Materials zusammensetzen und mit unterschiedlich dicken Zwischen- und Deckschichten bestükken und sind auch die Widerlager selbst in Anzahl und Anordnung vari- ierbar.

## Patentansprüche

1. Plattenförmiger Sicherheitsbauteil (1) aus Verbundwerkstoff mit Widerlagern in einander gegenüberliegenden Bauteilrandbereichen (4) zur Anbindung an eine Tragkonstruktion, dadurch gekennzeichnet, daß die Widerlager (5) zumindest eines Randbereiches (4) über die Anbindekräfte (K) druckbelastbare Lagerkörper (6) aus Honeycomb-Material aufweisen, die mit ihrer Wabenachsrichtung (T) auf die jeweilige Anbindekraftrichtung (R) ausgerichtet sind.

2. Sicherheitsbauteil nach Anspruch 1, dadurch gekennzeichnet, daß die Lagerkörper (6) aus wenigstens zwei durch eine Zwischenschicht (7) voneinander getrennten und zwischen zwei stirnseitigen Deckschichten (8) eingesetzten Lagen (61, 62, 63) des Honeycomb-Materials bestehen.
